# EUROPEAN PATENT APPLICATION

(11) **EP 3 346 082 A1**
(43) Date of publication of application: **11.07.2018**
(21) Application number: 16841436.5
(22) Date of filing: 09.08.2016
(51) Int. Cl.: E05F 15/46, B60J 1/00, E05F 15/689

(54) **PINCH SENSOR AND OPENING/CLOSING BODY CONTROL DEVICE**

(30) Priority: 02.09.2015 JP 2015173135
(71) Applicant: Kabushiki Kaisha Tokai Rika Denki Seisakusho, Ohguchi-cho Niwa-gun Aichi 480-0195 (JP)
(72) Inventor: NAGAO, Takashi, Niwa-gun Aichi 480-0195 (JP); KATSUYAMA, Tatsushi, Niwa-gun Aichi 480-0195 (JP)
(74) Representative: TBK
(86) International application number: PCT/JP2016/073419
(87) International publication number: WO 2017/038404

(57) **Abstract**

A pinch sensor (14) that is provided with: a capacitive sensor electrode (18) that is provided to window glass (3); a shield electrode (22) that covers a selected portion of the sensor electrode (18) in a non-contact manner and that sets a limited detection directivity for the pinch sensor (14); and a dummy electrode (23) that is arranged between the sensor electrode (18) and the shield electrode (22) and that is set to the same voltage as the sensor electrode (18) or to a voltage that is in the vicinity thereof.

## Description

The present invention relates to an entrapment sensor and an opening/closing body controller that detects entrapment of an object by an opening/closing body.

A known power window device includes an entrapment prevention device that includes a capacitive electrostatic sensor on a window glass and detects an object entrapped by the window glass based on an output from the sensor electrode (refer to patent document 1). The entrapment prevention device includes a sensor electrode of which the capacitance increases when an object approaches or contacts the sensor electrode. When the capacitance of the sensor electrode becomes greater than or equal to a predetermined value while the window glass rises, the entrapment prevention device lowers the window glass to prevent entrapment of an object.
Patent Document 1: Japanese Laid-Open Patent Publication No. 2005-314949

The sensor electrode of the known entrapment prevention device has no directivity. Thus, the output of the sensor electrode changes when an object approaches the window glass sideward. In this case, the known entrapment detection device may erroneously detect entrapment and reverse movement of the window glass despite no object being entrapped.

It is an object of the present invention to provide an entrapment sensor and an opening/closing body controller that reduces erroneous entrapment detections.

One aspect of the present invention provides an entrapment sensor for use with an opening/closing body. The entrapment sensor includes a capacitive sensor electrode arranged at an end of the opening/closing body in a closing direction, a shield electrode that covers a selected part of the sensor electrode in a non-contact manner and sets a limited detection directivity to the entrapment sensor, and a dummy electrode arranged between the sensor electrode and the shield electrode. A potential at the dummy electrode is set to be the same as or approximate to a potential at the sensor electrode.

In this structure, the shield electrode that covers a selected part of the sensor electrode in a non-contact manner sets a limited detection directivity to the entrapment sensor. This reduces erroneous entrapment detections. The shield electrode, which may be a ground potential, may decrease the detection sensitivity. However, since the dummy electrode is arranged between the sensor electrode and the shield electrode, the dummy electrode maintains or improves the sensitivity of the sensor electrode. This is further advantageous for preventing erroneous entrapment detections.

It is preferred that the shield electrode be arranged at two sides of the sensor electrode in a passenger compartment interior/exterior direction that is orthogonal to the closing direction of the opening/closing body. In this structure, the contact or approach of an object in the passenger compartment interior/exterior direction orthogonal to the closing direction of the opening/closing body reduces changes in the output of the sensor electrode and reduces erroneous entrapment detections.

It is preferred that the shield electrode open in the closing direction of the opening/closing body and be shaped to surround the dummy electrode and that the dummy electrode open in the closing direction of the opening/closing body and be shaped to surround the sensor electrode. In this structure, the surrounding of the sensor electrode by the shield electrode and the dummy electrode and the position of the opening of the shield electrode and the dummy electrode set the detection directivity of the entrapment sensor. The shield electrode and the dummy electrode open in the closing direction of the opening/closing body. This is advantageous for determining entrapment when closing the opening/closing body.

It is preferred that the sensor electrode, the shield electrode, and the dummy electrode be arranged entirely on the end of the opening/closing body. In this structure, the shield electrode and the dummy electrode are arranged entirely on the end of the opening/closing body together with the sensor electrode. This improves the detection accuracy of entrapment by the end of the opening/closing body and reduces erroneous entrapment detections.

An opening/closing body controller according to one aspect of the present invention includes the capacitive entrapment sensor and an entrapment controller that determines entrapment by the opening/closing body based on a detection signal provided from the capacitive entrapment sensor and reverses or stops movement of the opening/closing body when determining entrapment.

Several aspects of the present invention reduce erroneous entrapment detections. Other embodiments and advantages of the present invention are understood from the following description together with the drawings that illustrate the examples of technical ideas of the present invention.
Fig. 1 is a schematic diagram showing a power window device.
Fig. 2 is a block diagram showing one embodiment of the power window device.
Fig. 3A is a perspective view showing an entrapment sensor of the embodiment.
Fig. 3B is a schematic side view showing the entrapment sensor of Fig. 3A as viewed in a longitudinal direction of a sensor electrode.
Fig. 3C is a graph showing the relationship of the capacitance of the entrapment sensor of Fig. 3A and a glass position.
Fig. 4A is a perspective view showing an entrapment sensor of a first referential example.
Fig. 4B is a schematic side view showing the entrapment sensor of Fig. 4A as viewed in a longitudinal direction of a sensor electrode.
Fig. 4C is a graph showing the relationship of the capacitance of the entrapment sensor of Fig. 4A and a glass position.
Fig. 5A is a perspective view showing an entrapment sensor of a second referential example.
Fig. 5B is a schematic side view showing the entrapment sensor of Fig. 5A as viewed in a longitudinal direction of a sensor electrode.
Fig. 5C is a graph showing the relationship of the capacitance of the entrapment sensor of Fig. 5A and a glass position.
Figs. 6A to 6D are schematic side views showing entrapment sensors of several modified examples as viewed in the longitudinal direction of the sensor electrode.

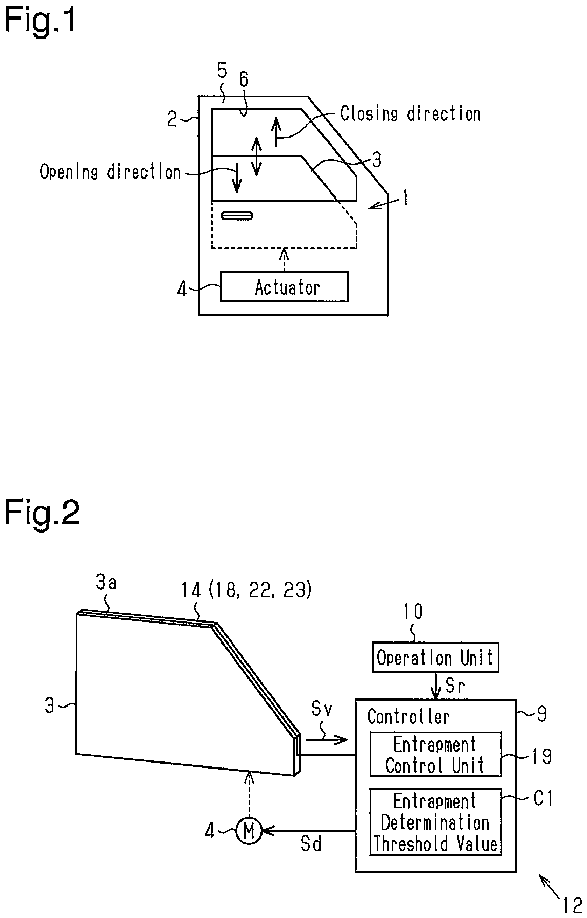

One embodiment of an entrapment sensor and an opening/closing body controller will now be described with reference to Figs. 1 to 5.

As shown in Fig. 1, a power window device 1, which is arranged in a vehicle or the like, includes a movable window glass 3, which is an opening/closing body arranged on a door (hereinafter referred to as vehicle door 2), and an actuator 4 that automatically opens and closes the window glass 3. The window glass 3 is, for example, allowed to move straight back and forth between a fully-closed position and a fully-open position in an opening 6 of a frame (hereinafter referred to as door frame 5). The actuator 4 may include, for example, a motor.

As shown in Fig. 2, the power window device 1 includes a controller 9 that controls the operation of the power window device 1. It is preferred that the controller 9 be, for example, a body electronic control unit (ECU) that manages the power supply of an on-board electric device. The controller 9, which may be a body ECU, can include one or more processors and a software program that is executed by the one or more processors and stored in, for example, a memory. A request signal Sr is input to the controller 9 from an operation unit 10 operated by a user when actuating the power window device 1. The operation unit 10 is arranged in, for example, the vehicle door 2. The power window device 1 can execute manual movement and automatic movement. The manual movement moves the window glass 3 for a period of time during which a user operation is performed on the operation unit 10. The automatic movement moves the window glass 3 to the fully-closed position or the fully-open position when the operation unit 10 is operated. Thus, the request signal Sr includes a manual lifting request signal, a manual lowering request signal, an automatic lifting request signal, and an automatic lowering request signal. The controller 9 provides a drive signal to the actuator 4 to move the window glass 3 up and down in accordance with the request single Sr from the operation unit 10.

The power window device 1 includes an opening/closing body controller 12 having an entrapment prevention function to prevent entrapment of an object (for example, human body) by the window glass 3. The opening/closing body controller 12 of the present embodiment determines entrapment of an object by the window glass 3 based on a detection signal Sv provided from a capacitive entrapment sensor 14, which is arranged on an end of the window glass 3, and reverses or stops movement of the window glass 3 when detecting entrapment.

In the present embodiment, the entrapment sensor 14 includes a capacitive sensor electrode 18 that detects the approach of or contact with an object. The sensor electrode 18 is arranged at the end of the window glass 3 in a closing direction. In the illustrated example, the sensor electrode 18 is arranged at an upper end of the window glass 3 (entire upper end surface 3a). The sensor electrode 18 detects a capacitance that changes in accordance with the approach of or contact with an object. That is, the sensor electrode 18 can detect an approaching object as well as contact with an object. When an object does not exist nearby, the sensor electrode 18 detects a capacitance having a low value. When an object approaches or contacts the sensor electrode 18, the capacitance becomes high.

The opening/closing body controller 12 includes an entrapment control unit 19 assigned with the entrapment prevention function. The entrapment control unit 19 is arranged in the controller 9. Further, the opening/closing body controller 12 includes an entrapment determination threshold value C1 for an entrapment determination. The entrapment determination threshold value C1 is stored in, for example, a memory (not shown) of the controller 9. The entrapment control unit 19 compares the entrapment determination threshold value C1 with the capacitance (detection signal Sv) that is output from the sensor electrode 18 while the window glass 3 rises. When the capacitance becomes greater than or equal to the entrapment determination threshold value C1, the entrapment control unit 19 determines that entrapment has occurred in the window glass 3 and downwardly reverses the movement direction of the window glass 3 or stops moving the window glass 3 in place.

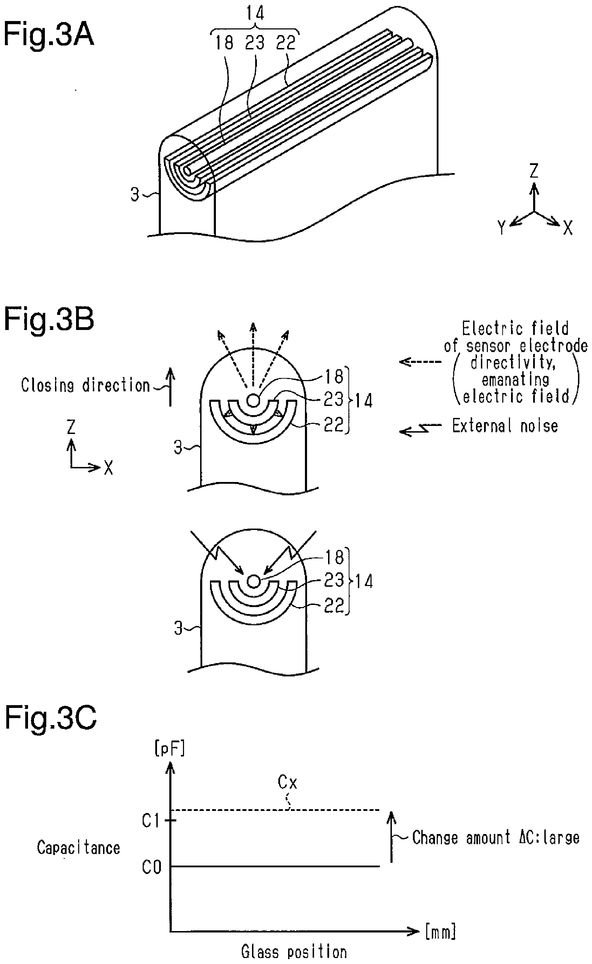

The structure of the entrapment sensor 14 will now be described with reference to Figs. 3A and 3B. In Fig. 3A, the YZ plane represents the plane of the window glass 3. In Fig. 3A, the Z-axis represents the movement direction of the window glass 3 when closing. In Figs. 3A and 3B, the X-axis represents a direction that is orthogonal to the plane of the window glass 3 and may be referred to as the passenger compartment interior/exterior direction. The entrapment sensor 14 includes a shield electrode 22 that covers a selected part of the sensor electrode 18 in a non-contact manner and sets a limited detection directivity to the entrapment sensor 14 and a dummy electrode 23 that obtains the detection sensitivity of the sensor electrode 18. The shield electrode 22 and the dummy electrode 23 are arranged in the end of the window glass 3 (upper end surface 3a). The sensor electrode 18, the shield electrode 22, and the dummy electrode 23 may be completely embedded in the window glass 3. In this case, the gap between the sensor electrode 18 and the shield electrode 22 and the gap between the shield electrode 22 and the dummy electrode 23 may be filled with glass. It is preferred that the shield electrode 22 include portions that cover the two sides of the sensor electrode 18 in the passenger compartment interior/exterior direction (X-axis in Figs. 3A and 3B). In the present embodiment, the shield electrode 22 opens in the closing direction of the window glass 3 and is shaped to surround the sensor electrode 18 (for example, shaped as U-shaped groove) in directions excluding the closing direction of the window glass 3.

The dummy electrode 23 is arranged between the sensor electrode 18 and the shield electrode 22. The potential at the dummy electrode 23 is set to be the same as or approximate to the potential at the sensor electrode 18. The dummy electrode 23 does not cover the sensor electrode 18 and the shield electrode 22 in the closing direction of the window glass 3. It is preferred that the dummy electrode 23 include portions that cover the two sides of the sensor electrode 18 and/or two sides of the shield electrode 22 in at least the indoor/outdoor direction (X-axis in Figs. 3A and 3B). The dummy electrode 23 may have, for example, a U-shaped groove in the same manner as the shield electrode 22. It is preferred that the shield electrode 22 and the dummy electrode 23 have the same length as the sensor electrode 18. It is preferred that the sensor electrode 18, the shield electrode 22, and the dummy electrode 23 be arranged entirely on the end of the window glass 3.

The sensor electrode 18 has a longitudinal axis that intersects the closing direction of the window glass 3 and may be, for example, a sensor electrode wire. The shield electrode 22 and the dummy electrode 23 may be parallel to the longitudinal axis of the sensor electrode 18. The shield electrode 22 and the dummy electrode 23 may form a double electrode layer arranged in a direction that intersects both of the closing direction of the window glass 3 and the longitudinal axis of the sensor electrode 18. The shield electrode 22 and the dummy electrode 23 of Fig. 3 form a double electrode layer that surrounds the sensor electrode 18 in directions excluding the closing direction of the window glass 3. It is preferred that the shield electrode 22 be connected to a ground potential or connected to ground.

The operation of the power window device (entrapment sensor 14) will now be described with reference to Figs. 3 to 5.

As shown in Fig. 3C, for example, when an object (finger or the like of person) approaches or contacts the sensor electrode 18 (upper end surface 3a of window glass 3) as the window glass 3 rises (during automatic up operation), the capacitance of the sensor electrode 18 increases to "Cx." When the entrapment control unit 19 determines that the capacitance of the sensor electrode 18 has become greater than or equal to the entrapment determination threshold value C1 as the window glass 3 rises, the entrapment control unit 19 reverses or stops movement of the window glass 3. Thus, the finger or the like of the person is not entrapped when the window glass 3 rises.

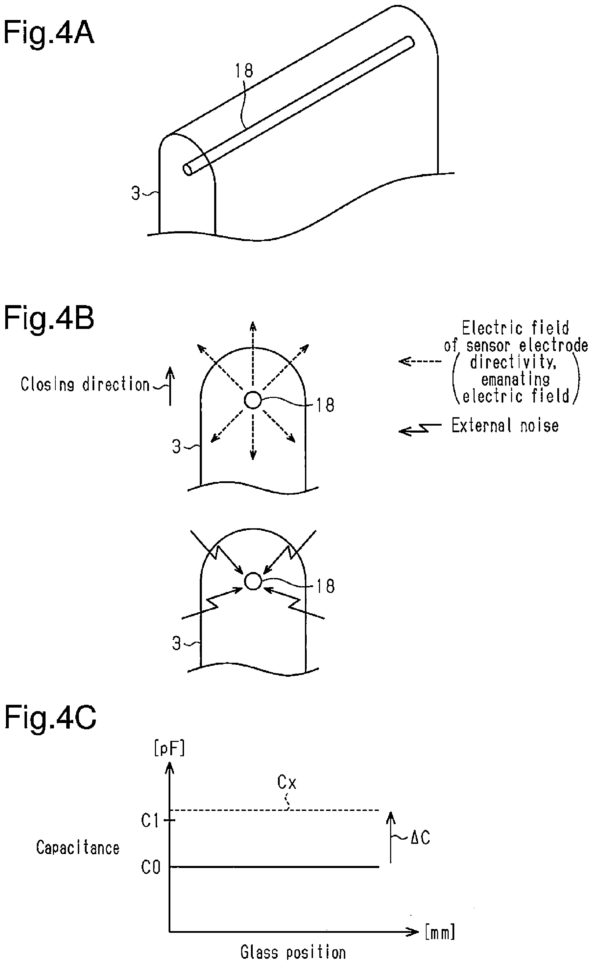

Figs. 4A to 4C show an entrapment sensor of a first referential example in which only the sensor electrode 18 is arranged in the window glass 3. The entrapment sensor of the first referential example does not include the shield electrode 22 and the dummy electrode 23, and the sensor electrode 18 has no directivity. Thus, the entrapment sensor of the first referential example has no directivity. This will increase the output of the sensor electrode 18 even when a finger of the person merely approaches a side surface of the window glass 3. Thus, when the finger or the like of the person merely approaches the window glass 3 sideward (for example, X-axis direction in Figs. 3A and 3B), which is a direction that differs from the movement direction of the closing window glass 3, the capacitance of the sensor electrode 18 may become greater than or equal to the entrapment determination threshold value C1 and movement of the closing window glass 3 may be reversed or stopped. In the first referential example, erroneous object detection has a tendency to occur.

In the first referential example, an electric field of the sensor electrode 18 emanates from the entire circumference of the sensor electrode 18 without being substantially shielded. Thus, the emanating electric field of the sensor electrode 18 may affect other ECUs. For example, the emanating electric field of the sensor electrode 18 may affect a radio receiver as radiating noise and increase noise that mixes with an output voice of the radio receiver.

In the first referential example, the sensor electrode 18 is easily affected by external noise. For example, external noise may change the capacitance of the sensor electrode 18, and the entrapment sensor of the first referential example has weak immunity.

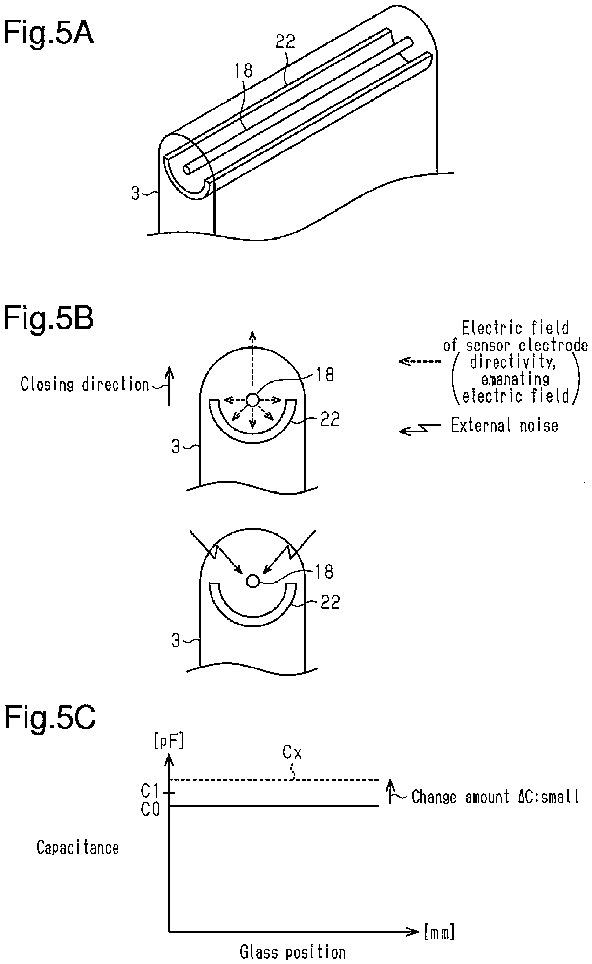

Figs. 5A to 5C show an entrapment sensor of a second referential example in which the sensor electrode 18 and the shield electrode 22 are arranged in the window glass 3. The shield electrode 22 of the second referential example surrounds the side and lower portions of the sensor electrode 18. Thus, the entrapment sensor of the second referential example has a detection directivity that is limited to the upper direction (closing direction of window glass 3). For example, even when the finger or the like of the person approaches the window glass 3 sideward, the output of the sensor electrode 18 will not react to the approach. Thus, the entrapment sensor of the second referential example can reduce erroneous detection of an object.

In the second referential example, the emanating electric field of the sensor electrode 18 is also limited to the upper direction. This reduces the influence of radiating noise on other ECUs. For example, this is advantageous for reducing noise that mixes with the output voice of a radio receiver.

In the second referential example, the shield electrode 22 blocks external noise that reaches the window glass 3 from beside or below. This reduces or prevents changes in the capacitance of the sensor electrode 18 resulting from external noise. Thus, the entrapment sensor of the second referential example has a higher immunity than that of the first referential example.

However, in the second referential example, the proximity of the sensor electrode 18 and the shield electrode 22 reduces the capacitance detection sensitivity of the sensor electrode 18. That is, the base capacitance "C0" of the sensor electrode 18 will be high, and a capacitance change amount ΔC may be small when an object (hand or the like of person) contacts the sensor electrode 18. The base capacitance C0 is the capacitance value of the sensor electrode 18 when there is no approach of or contact with an object and is set whenever, for example, the power supply of a vehicle goes on.

As shown in Fig. 3, in the present embodiment, the shield electrode 22 is arranged proximate to the sensor electrode 18, the dummy electrode 23 is arranged between the sensor electrode 18 and the shield electrode 22, and the potentials at the sensor electrode 18 and the dummy electrode 23 are the same as or approximate to each other. This allows the capacitance (magnetic field) to be set to "0" between the sensor electrode 18 and the dummy electrode 23. Thus, since the base capacitance C0 is set to be low, the capacitance change amount ΔC can be obtained. That is, the sensitivity of the sensor electrode 18 is obtained.

The structure of the present embodiment has the advantages described below.
(1) The shield electrode 23 covers a selected part of the sensor electrode 18 in a non-contact manner and sets a limited detection directivity to the entrapment sensor 14. For example, the detection directivity of the entrapment sensor 14 is limited to a predetermined direction (for example, closing direction of window glass 3) that is not covered or electromagnetically shielded by the shield electrode 22. This reduces erroneous entrapment detections. The shield electrode 22, which may be a ground potential, may lower the detection sensitivity of the sensor electrode 18. However, the dummy electrode 23 arranged between the sensor electrode 18 and the shield electrode 22 maintains or improves the sensitivity of the sensor electrode 18. This is further advantageous for preventing erroneous entrapment detections.
(2) The shield electrode 22 is arranged at the two sides of the sensor electrode 18 in the interior/exterior direction (X-axis in Figs. 3A and 3B) that is orthogonal to the closing direction of the window glass 3. The shield electrode 22 does not cover the sensor electrode 18 in the closing direction of the window glass 3. This reduces changes in the output of the sensor electrode 18 caused by contact or approach of an object in the indoor/exterior direction that is orthogonal to the closing direction of the window glass 3. Thus, erroneous entrapment detections are reduced.
(3) The shield electrode 22 and the dummy electrode 23 open in the closing direction of the window glass 3 and are shaped to surround the sensor electrode 18 (bowl-shaped). This limits the directivity of the sensor electrode 18 to only a single direction (closing direction of window glass 3) and is thus advantageous for performing entrapment detection by the sensor electrode 18 further accurately.
(4) The sensor electrode 18, the shield electrode 22, and the dummy electrode 23 are entirely arranged at the end of the window glass 3. When the sensor electrode 18 is arranged on the entire end surface of the window glass 3, the shield electrode 22 and the dummy electrode 23 are arranged on any portion of the sensor electrode 18. This is further advantageous for preventing erroneous entrapment detections.

The embodiment is not limited to the above structure and may be modified as described below.

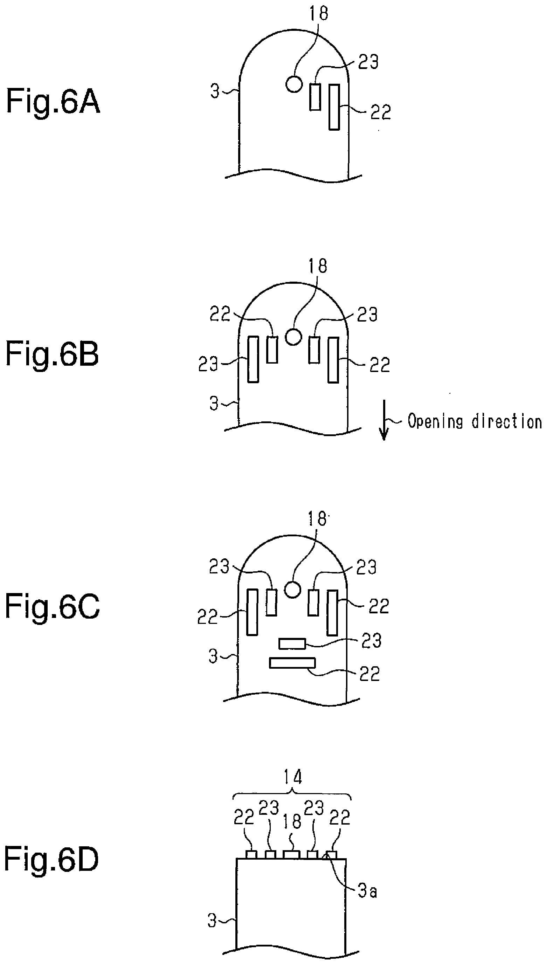

As shown in Fig. 6A, the shield electrode 22 and the dummy electrode 23 may include a portion that covers one side of the sensor electrode 18 in the indoor/exterior direction of the window glass 3 and does not have to cover the other side of the sensor electrode 18.

As shown in Fig. 6B, the shield electrode 22 and the dummy electrode 23 may cover only the two sides of the sensor electrode 18 in the indoor/exterior direction of the window glass 3 and does not have to cover the sensor electrode 18 in the opening direction of the window glass 3.

As shown in Fig. 6C, the shield electrode 22 and the dummy electrode 23 may be arranged as a plurality of pairs that are spaced apart from one another, for example, three pairs located at the right, left, and lower sides of the shield electrode 22, as viewed in the axial direction of the shield electrode 22.

As shown in Fig. 6D, the entrapment sensor 14 does not have to be embedded in the window glass 3 and may be fixed to the upper end surface 3a of the window glass 3. In this case, it is preferred that the entrapment sensor 14 be protected by a protection coating that covers the upper end surface 3a of the window glass 3 and the electrode of the entrapment sensor 14.

In Figs. 6A to 6D, the vertical position (height in opening/closing direction) of the shield electrode 22 and/or the dummy electrode 23 relative to the sensor electrode 18 may be changed.

The distance between the sensor electrode 18 and the dummy electrode 23 and the distance between the dummy electrode 23 and the shield electrode 22 may be the same or differ from each other.

The sensor electrode 18, the shield electrode 22, and the dummy electrode 23 may be arranged on any portion of the window glass 3.

The sensor electrode 18, the shield electrode 22, and the dummy electrode 23 may be shaped to have different lengths. In one example, the sensor electrode 18 may be the longest, and the shield electrode 22 and the dummy electrode 23 may be formed on necessary portions.

The shield electrode 22 and the dummy electrode 23 are not limited to the shape of U-shaped grooves and may have different shapes.

The entrapment sensor 14 may be one of a plurality of entrapment sensors. For example, the plurality of entrapment sensors 14 may be arranged or embedded at a number of locations in the window glass 3.

The entrapment determination threshold value C1 does not have to be fixed and may be variable. In this case, it is preferred that the entrapment determination threshold value C1 be set in accordance with the current value of a capacitance and/or the surrounding environment when, for example, the power supply of a vehicle goes on.

The opening/closing body is not limited to the window glass 3 and may be applied to various types of moving opening/closing bodies other than the window glass 3.

The opening/closing body controller 10 of the present embodiment having the entrapment prevention function does not have to be applied to a vehicle and is applicable to other devices or equipment such as the door of a building door.

In an application having a low detection sensitivity requirement, the entrapment sensor 14 may include only the sensor electrode 18 and the shield electrode 22 like in the second referential example of Fig. 5. In this case, the directivity of object detection is limited. Thus, the advantage of preventing erroneous entrapment detections is still obtained.

In several examples, an entrapment sensor for use with an entrapment determination device that determines entrapment by an opening/closing body includes a capacitive sensor electrode arranged at an end of the opening/closing body in a closing direction and a shield electrode arranged at two sides of the sensor electrode in a direction that intersects the closing direction of the opening/closing body. In this structure, the shield electrode shields the sensor electrode in the direction that intersects the closing direction of the opening/closing body. Thus, the entrapment sensor has a directivity that does not detect the approach of or contact with an object in the direction intersecting the closing direction of the opening/closing body.

Several examples provide an entrapment sensor for use with a movable panel having a leading edge in a movement direction. The entrapment sensor includes a sensor electrode, which may be a first elongated conductor strip arranged in a fixed manner at the leading edge of the movable panel or proximate to the leading edge, a dummy electrode, which may be a second elongated conductor strip that extends in parallel to the sensor electrode and covers a first portion in a circumferential surface of the sensor electrode in a non-contact manner, and a grounded shield electrode, which may be a third elongated conductor strip that extends in parallel to the sensor electrode and the dummy electrode and covers in a non-contact manner a circumferential surface of the dummy electrode covering the first portion of the circumferential surface of the sensor electrode, with the circumferential surface of the sensor electrode including a second portion that differs from the first portion, and the second portion is not covered by the dummy electrode and the shield electrode. In this structure, since the second portion of the circumferential surface of the sensor electrode is not covered by the dummy electrode and the shield electrode, the entrapment sensor has a detection sensitivity in a predetermined angular range about the longitudinal axis of the sensor electrode corresponding to the second portion of the sensor electrode. It is preferred that the second portion of the circumferential surface of the sensor electrode be directed toward the leading edge of the movable panel. In this structure, the entrapment sensor has a detection directivity in the movement direction of the movable panel.

The subject matter of the present invention may exist in fewer features than all the features of the particular embodiments and modified examples. The scope of the present invention should be determined with all the scopes of the claims and equivalents.

### Description of Reference Characters

3) opening/closing body (window glass); 12) opening/closing body controller; 14) entrapment sensor; 18) sensor electrode; 19) entrapment control unit; 22) shield electrode; 23) dummy electrode; Sv) detection signal

## Claims

1. An entrapment sensor for use with an opening/closing body, the entrapment sensor comprising:
a capacitive sensor electrode arranged at an end of the opening/closing body in a closing direction;
a shield electrode that covers a selected part of the sensor electrode in a non-contact manner, wherein the shield electrode sets a limited detection directivity to the entrapment sensor; and
a dummy electrode arranged between the sensor electrode and the shield electrode,
wherein a potential at the dummy electrode is set to be the same as or approximate to a potential at the sensor electrode.

2. The entrapment sensor according to claim 1, wherein the shield electrode is arranged at two sides of the sensor electrode in a passenger compartment interior/exterior direction that is orthogonal to the closing direction of the opening/closing body.

3. The entrapment sensor according to claim 1 or 2, wherein
the shield electrode opens in the closing direction of the opening/closing body and is shaped to surround the dummy electrode, and
the dummy electrode opens in the closing direction of the opening/closing body and is shaped to surround the sensor electrode.

4. The entrapment sensor according to any one of claims 1 to 3, wherein the sensor electrode, the shield electrode, and the dummy electrode are arranged entirely on the end of the opening/closing body.

5. The entrapment sensor according to any one of claims 1 to 4, wherein
the sensor electrode is a sensor electrode wire having a longitudinal axis that intersects the closing direction of the opening/closing body, and
the shield electrode and the dummy electrode are parallel to the longitudinal axis of the sensor electrode.

6. The entrapment sensor according to claim 5, wherein the shield electrode and the dummy electrode form a double electrode layer arranged in a direction that intersects both of the closing direction of the opening/closing body and the longitudinal axis of the sensor electrode.

7. The entrapment sensor according to claim 5, wherein the shield electrode and the dummy electrode form a double electrode layer that surrounds the sensor electrode in directions excluding the closing direction of the opening/closing body.

8. The entrapment sensor according to any one of claims 1 to 7, wherein
the opening/closing body is a window glass,
the sensor electrode, the shield electrode, and the dummy electrode are embedded in the window glass, and
a gap between the sensor electrode and the shield electrode and a gap between the shield electrode and the dummy electrode are filled with glass.

9. The entrapment sensor according to any one of claims 1 to 8, wherein the shield electrode is connected to a ground potential.

10. An opening/closing body controller comprising:
the capacitive entrapment sensor according to any one of claims 1 to 9; and
an entrapment controller that determines entrapment by the opening/closing body based on a detection signal provided from the capacitive entrapment sensor and reverses or stops movement of the opening/closing body when determining entrapment.
